# EUROPEAN PATENT SPECIFICATION

(11) **EP 3 031 754 B1**
(45) Date of publication and mention of the grant of the patent: **24.10.2018**
(21) Application number: 14197179.6
(22) Date of filing: 10.12.2014
(51) Int. Cl.: B65G 47/51

(54) **Buffer system for dough products**
Puffersystem für Teigwaren
Système de tampon pour produits à base de pâte

(43) Date of publication of application: 15.06.2016
(73) Proprietor: Radie B.V., 4104 BC Culemborg (NL)
(72) Inventor: VAN BLOKLAND, Johannes, Josephus, Antonius, 1251 BG Laren (NL)
(74) Representative: Patentwerk B.V.

(56) References cited:
- DE-A1- 4 032 533
- GB-A- 2 292 926
- US-A- 1 935 409
- US-A- 5 271 489

## Description

The present invention relates to a buffer system for dough products, and to a method for operating such system.

In automated dough production, dough products are usually moved between processing stages on conveyors, and where necessary, taken over from one conveyor to another, because a new processing stage or the end of a conveyor is reached, or because a different speed is required or possible after a certain processing step. In general, products conveyed in parallel rows in order to increase the production capacity, wherein it is convenient when each row has an equal throughput, and in some cases even sharply outlined dough products. During processing of the products however, differences between the parallel rows, both in the spacing and in the amount of dough products may occur.

It is known in the art to outline dough products by catching them at a certain stage, and to release them for instance simultaneously with other dough parts. It is also known to buffer dough parts and to release them in a later stadium. These solutions according to the state of the art may be satisfactory in certain situations, but still leave room for improvement at certain areas, in particular when dough products are conveyed and processed in parallel.

US 5271489 A discloses a buffer system comprising an input conveyor, an output conveyor and a third, adjustable-length conveyor between them. The adjustment of the length is done by means of two pivoting points around which two legs of the conveyor are rotated. This document discloses in combination all the features in the preamble of claim 1.

DE 4032533 A1 discloses a buffer system comprising an input conveyor, an output conveyor and a third, adjustable-length conveyor between them. The adjustment is done by the translation of a roller in a vertical direction.

GB 2292926 A discloses a buffer system comprising an input conveyor, an output conveyor and a third, adjustable-length conveyor between them. The adjustment of the length is done by means of two pivoting points around which two legs of the conveyor are rotated.

It is therefore a goal of the present invention to provide a buffer system and method for dough products that lacks the above disadvantages.

The invention thereto provides a buffer system for dough products, comprising a first conveyor, for delivering dough products, a second conveyor, for carrying off dough products; a third conveyor, for receiving the dough products from the first conveyor and delivering the dough products to the second conveyor, the third conveyor provided with flights or cams for supporting individual products, and having a path with an adjustable length between the first and the second conveyor, wherein the length of the path is adjustable by lifting or lowering at least one location along the path.

The buffer system according to the invention provides the advantage that a difference in delivery speed of the first conveyor with the speed of carrying off dough products by the third conveyor is solved by an adjustable capacity for dough products of the third converter. Since the height of at least one location along the path is altered, a part of the track will be inclined in most situations. When the inclination angle is low, this may not cause any difficulties, but when it is higher, and when the dough products are not too sticky, they may tend to roll over the third conveyor. For that reason, the latter is provided with flights or cams for supporting individual products, which may be embodied by simple baffles.

In the buffer system according to the present invention, the path of the conveyor third conveyor has a circle-segment shape, having two straight legs with equal length extending from a common point, and one annular leg, oriented distally from said point and with a radius corresponding to the length of the straight legs, and wherein the length of the straight legs corresponds with the shortest distance between the first and the second conveyor.
This circle segment shape, or in popular terms, tart-piece-shape, has proven to enable a robust implementation with an endless loop for food products, and to provide a shape of the path from the first to the second conveyor that is suitable for handling dough products without damaging them either by picking them up or by delivering them to a next conveyor.

In the buffer system according to the present invention, the common point of the two straight legs forms an axis of rotation for the third conveyor. This way the dough products are moved is either along a curved path, or along a straight track. Preferably the common point of the two straight legs is arranged adjacent to the second conveyor for delivering the dough products to said second conveyor.
When picking up the dough products from the first conveyor, they are lifted by the third conveyor, while after being transferred from the annular part to the straight leg, they rest against the support, and when they reach the end of the third conveyor, they automatically roll onto the second conveyor as a result of gravity.
Further advantage of the present invention is obtained when the third conveyor is divided into multiple lanes extending in parallel from the first to the second conveyor, for receiving dough products delivered in multiple lanes from the first conveyor, and for delivering dough products in multiple lanes to the second conveyor, each of the lanes of the third conveyor having a path with an individually adjustable length between the first and the second conveyor.

This way, a misbalance between dough products conveyed on multiple parallel lanes can be corrected by the present invention. When one lane receives more dough products than the other during a time interval, the buffer capacity may be (temporary) increased. The third conveyor may then transfer dough products to parallel lanes of the second conveyor at equal speeds, which is often desired for further processing steps in the dough line. Once the misbalance of dough products received by the first conveyor has stopped, or changed from one line to the other, the buffer capacity of said line can be decreased again, or the capacity of the other lines can be increased. This embodiment is in particular useful when the average number of dough products on the lanes is equal, but actual differences during relatively short time periods may occur.

For those cases where the average amount of dough products on multiple dough lines has a continuous misbalance, a further feature according to the present invention may provide a solution. In those cases, the buffer system may comprise means for transferring a dough product from one lane to another lane before delivering it to the second conveyor. Dough products provided on a line that has a higher rate of receiving products may then be divided over one or more other lines with lower rates of receiving products.

Such means for transferring a dough product from one lane to another lane may for instance be embodied by an intermediate dough-product-receiver, such as a gutter, arranged movable in a direction perpendicular to the direction of conveyance of the second conveyor, for receiving the dough products from the third conveyor.

The invention further relates to a method for operating a buffer system according to any of the preceding claims, comprising receiving dough products from the first conveyor and delivering the dough products to the second conveyor with the third conveyor; increasing the length of the path between the first and the second conveyor when the amount of dough products received from the first conveyor is higher than the amount of dough products to be delivered to the second conveyor; and decreasing the length of the path between the first and the second conveyor when the amount of dough products received from the first conveyor is lower than the amount of dough products to be delivered to the second conveyor.

The method may further comprise the step of adapting the length of the path between the first and the second conveyor such that a flight or cam for supporting an individual product is outlined with a product conveyed on the first conveyor, while setting or keeping a flight or cam for supporting an individual product outlined with the second conveyor at a predetermined position. This is in particularly useful when dough products arrive from the first conveyor at the third conveyor at a moment when the third conveyor is to deliver a dough product to the second conveyor.

The method may in a further embodiment comprise the steps of receiving dough products from the first conveyor and delivering the dough products to the second conveyor on multiple parallel lines and/or to transferring dough products from one parallel line to another when the amount of dough products in one line of the third conveyor received from the first conveyor is higher than the amount of dough products to be delivered to the second conveyor.

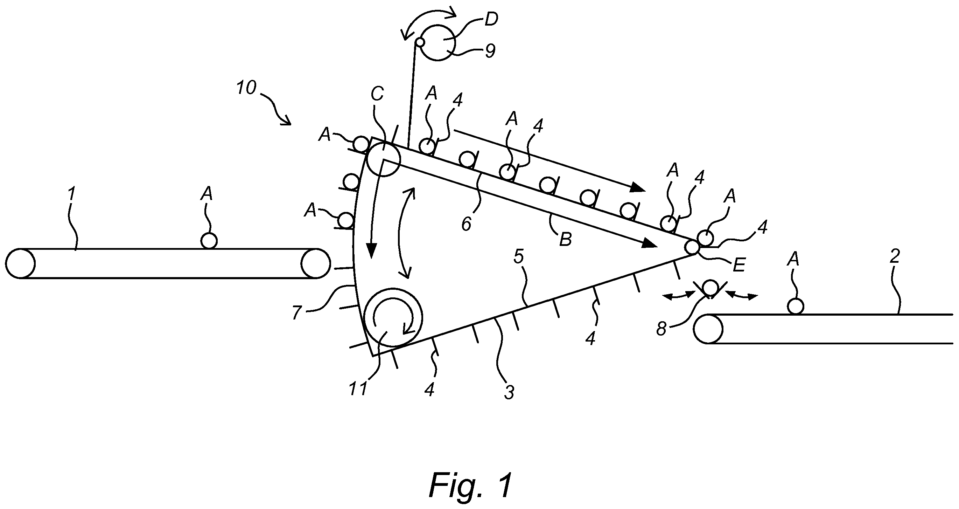

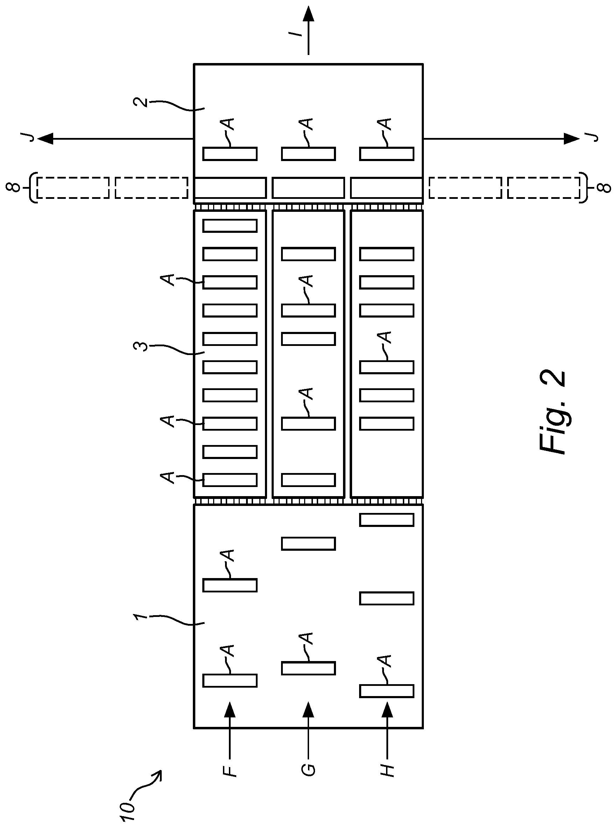

The invention will now be elucidated into more detail with reference to the following figures. Figure 1 shows a schematic side-view of the buffer system according to the present invention. Figure 2 shows a schematic top-view of the buffer system according to the present invention.
Figure 1 shows a schematic side-view 10 of the buffer system according to the present invention, showing a first conveyor 1, for delivering dough products A, a second conveyor 2, for carrying off the dough products A; a third conveyor 3, for receiving the dough products A from the first conveyor 1 and delivering the dough products to the second conveyor 2, the third conveyor 3 provided with flights or cams 4 for supporting individual products, and having a path with an adjustable length B between the first and the second conveyor 1, 2, which length of the path is adjustable by lifting or lowering at least one location C along the path with the aid of actuator D. The path of the conveyor third conveyor has a circle-segment shape, having two straight legs 5, 6 with equal length extending from a common point E, and one annular leg 7, oriented distally from said point E and with a radius corresponding to the length of the straight legs 5, 6, and wherein the length of the straight legs 5, 6 essentially corresponds with the shortest distance between the first and the second conveyor. The common point E of the two straight legs forms an axis of rotation for the third conveyor, and is arranged adjacent to the second conveyor 2 for delivering the dough products A to said second conveyor 2. The figure schematically shows a first actuator 9, for increasing respectively decreasing the length of the path of the third conveyor, and a second actuator 11 for moving the third conveyor, and the flights or cams therewith. The actuators 9 and 11 may be configured for adapting the length of the path between the first and the second conveyor such that a flight or cam for supporting an individual product is outlined with a product conveyed on the first conveyor, while setting or keeping a flight or cam for supporting an individual product outlined with the second conveyor at a predetermined position. The depicted location of the actuators is exemplary only. Many other possibilities exist.
Figure 2 shows a schematic top-view of the buffer system 10 according to the present invention, wherein like reference numbers indicate similar parts of the invention. From the figure it shows that the third conveyor is divided into multiple lanes F, G, H, extending in parallel from the first to the second conveyor 1, 2, for receiving dough products A delivered in multiple lanes from the first conveyor 1, and for delivering dough products A in multiple lanes to the second conveyor 2, each of the lanes of the third conveyor having a path with an individually adjustable length between the first and the second conveyor. The system has means for transferring a dough product from one lane to another lane before delivering it to the second conveyor 2, embodied by an intermediate dough-product-receiver 8, arranged movable in a direction J perpendicular to the direction of conveyance I of the second conveyor, for receiving the dough products A from the third conveyor, and transferring the dough products from one parallel line to another when the average amount of dough products in one line of the third conveyor received from the first conveyor is higher than the amount of dough products to be delivered to the second conveyor.

The above described examples are exemplary only and do not limit the scope of protection of the present invention, as defined by the following claims.

## Claims

1. Buffer system (10) for dough products, comprising:
- A first conveyor (1), for delivering dough products;
- A second conveyor (2), for carrying off dough products;
- A third conveyor (3), for receiving the dough products from the first conveyor and delivering the dough products to the second conveyor, the third conveyor
∘ provided with flights or cams (4) for supporting individual products, and
∘ having a path with an adjustable length (B) between the first and the second conveyor;
wherein:
∘ the length of the path is adjustable by lifting or lowering at least one location (C) along the path;
**characterized in that** the path of the third conveyor has a circle-segment shape, having two straight legs (5, 6) with equal length extending from a common point (E), and one annular leg (7), oriented distally from said point (E) and with a radius corresponding to the length of the straight legs (5, 6), wherein the length of the straight legs corresponds with the shortest distance between the first (1) and the second (2) conveyor, and wherein the common point (E) of the two straight legs (5, 6) forms an axis of rotation for the third conveyor (3).

2. Buffer system (10) according to claim 1, wherein the common point (E) of the two straight legs (5, 6) is arranged adjacent to the second conveyor (2) for delivering the dough products to said second conveyor.

3. Buffer system (10) according to any of the preceding claims, wherein the third conveyor (3) is divided into multiple lanes (F, G, H) extending in parallel from the first (1) to the second (2) conveyor, for receiving dough products delivered in multiple lanes from the first conveyor, and for delivering dough products in multiple lanes to the second conveyor, each of the lanes of the third conveyor having a path with an individually adjustable length between the first and the second conveyor.

4. Buffer system (10) according to claim 3, comprising means (8) for transferring a dough product from one lane (F, G, H) to another lane (F, G, H) before delivering it to the second conveyor (2).

5. Buffer system (10) according to claim 4, wherein the means for transferring a dough product from one lane to another lane comprise an intermediate dough-product-receiver (8) such as a gutter, arranged movable in a direction (J) perpendicular to the direction of conveyance (I) of the second conveyor, for receiving the dough products from the third conveyor.

6. Method for operating a buffer system (10) according to any of the preceding claims, comprising:
- receiving dough products from the first conveyor (1) and delivering the dough products to the second conveyor (2) with the third conveyor (3);
- increasing the length of the path (B) between the first and the second conveyor when the amount of dough products received from the first conveyor is higher than the amount of dough products to be delivered to the second conveyor; and
- decreasing the length of the path (B) between the first and the second conveyor when the amount of dough products received from the first conveyor is lower than the amount of dough products to be delivered to the second conveyor.

7. Method according to claim 6, comprising adapting the length of the path (B) between the first (1) and the second (2) conveyor such that a flight or cam (4) for supporting an individual product is outlined with a product conveyed on the first conveyor, while setting or keeping a flight or cam for supporting an individual product outlined with the second conveyor at a predetermined position.

8. Method according to claim 6 or 7, comprising:
- receiving dough products from the first conveyor (1) and delivering the dough products to the second conveyor (2) on multiple parallel lines (F, G, H).

9. Method according to claim 6 and 8, comprising:
- transferring dough products from one parallel line (F, G, H) to another (F, G, H) when the average amount of dough products in one line of the third conveyor (3) received from the first conveyor (1) is higher than the amount of dough products to be delivered to the second conveyor (2).

## Patentansprüche

1. Puffersystem (10) für Teigwaren, aufweisend:
- eine erste Fördervorrichtung (1) zum Zuführen von Teigwaren;
- eine zweite Fördervorrichtung (2) zum Abführen von Teigwaren;
- eine dritte Fördervorrichtung (3) zum Aufnehmen der Teigwaren von der ersten Fördervorrichtung und Zuführen der Teigwaren der zweiten Fördervorrichtung, wobei die dritte Fördervorrichtung
∘ mit Gewindegängen oder Mitnehmern (4) zum Halten einzelner Waren versehen ist, und
∘ einen Pfad mit einer zwischen der ersten und der zweiten Fördervorrichtung einstellbaren Länge (B) aufweist; wobei:
∘ die Länge des Pfades einstellbar ist, indem mindestens eine Stelle (C) entlang des Pfades angehoben oder abgesenkt wird;
**dadurch gekennzeichnet, dass**
der Pfad der dritten Fördervorrichtung die Gestalt eines Kreissegments mit zwei geraden Schenkeln (5, 6) von gleicher Länge, welche sich aus einem gemeinsamen Punkt (E) erstrecken, und einem ringförmigen Schenkel (7) aufweist, welcher von dem Punkt (E) abgewandt ausgerichtet ist und einen Radius aufweist, welcher der Länge der geraden Schenkel (5, 6) entspricht,
wobei die Länge der geraden Schenkel dem kürzesten Abstand zwischen der ersten (1) und der zweiten (2) Fördervorrichtung entspricht, und
wobei der gemeinsame Punkt (E) der beiden geraden Schenkel (5, 6) eine Drehachse für die dritte Fördervorrichtung (3) bildet.

2. Puffersystem (10) gemäß Anspruch 1, wobei der gemeinsame Punkt (E) der beiden geraden Schenkel (5, 6) angrenzend an die zweite Fördervorrichtung (2) zum Zuführen der Teigwaren der zweiten Fördervorrichtung angeordnet ist.

3. Puffersystem (10) gemäß einem der vorhergehenden Ansprüche, wobei die dritte Fördervorrichtung (3) in mehrere Bahnen (F, G, H) unterteilt ist, welche sich parallel von der ersten (1) zu der zweiten (2) Fördervorrichtung erstrecken, um Teigwaren, welche in mehreren Bahnen von der ersten Fördervorrichtung zugeführt werden, aufzunehmen, und um Teigwaren in mehreren Bahnen der zweiten Fördervorrichtung zuzuführen, wobei jede Bahn der dritten Fördervorrichtung einen Pfad mit einer zwischen der ersten und der zweiten Fördervorrichtung einzeln einstellbaren Länge aufweist.

4. Puffersystem (10) gemäß Anspruch 3, aufweisend Mittel (8) zum Überführen einer Teigware von einer Bahn (F, G, H) zu einer anderen Bahn (F, G, H), bevor sie der zweiten Fördervorrichtung (2) zugeführt wird.

5. Puffersystem (10) gemäß Anspruch 4, wobei die Mittel (8) zum Überführen einer Teigware von einer Bahn zu einer anderen Bahn eine dazwischenliegende Teigwarenaufnahme (8), wie beispielsweise eine Rinne, aufweisen, welche beweglich in einer Richtung (J) senkrecht zu der Förderrichtung (I) der zweiten Fördervorrichtung angeordnet ist, um die Teigwaren von der dritten Fördervorrichtung aufzunehmen.

6. Verfahren zum Betreiben eines Puffersystems (10) gemäß einem der vorhergehenden Ansprüche, aufweisend:
Aufnehmen von Teigwaren von der ersten Fördervorrichtung (1) und Zuführen der Teigwaren der zweiten Fördervorrichtung (2) mit der dritten Fördervorrichtung (3);
Erhöhen der Länge des Pfades (B) zwischen der ersten und der zweiten Fördervorrichtung, wenn die Anzahl der von der ersten Fördervorrichtung aufgenommenen Teigwaren größer als die der zweiten Fördervorrichtung zuzuführende Anzahl von Teigwaren ist; und
Verringern der Länge des Pfades (B) zwischen der ersten und der zweiten Fördervorrichtung, wenn die Anzahl der von der ersten Fördervorrichtung aufgenommenen Teigwaren kleiner als die der zweiten Fördervorrichtung zuzuführende Anzahl von Teigwaren ist.

7. Verfahren gemäß Anspruch 6, aufweisend Anpassen der Länge des Pfades (B) zwischen der ersten (1) und der zweiten (2) Fördervorrichtung, so dass ein Gewindegang oder Mitnehmer (4) zum Halten einer einzelnen Ware mit einer auf der ersten Fördervorrichtung geförderten Ware behandelt wird, während ein Gewindegang oder Mitnehmer zum Halten einer einzelnen Ware, welche von der zweiten Fördervorrichtung behandelt wird, in eine vorgegebene Position gebracht oder gehalten wird.

8. Verfahren gemäß Anspruch 6 oder 7, aufweisend:
- Aufnehmen von Teigwaren von der ersten Fördervorrichtung (1) und Zuführen der Teigwaren der zweiten Fördervorrichtung (2) auf mehreren parallelen Bahnen (F, G, H).

9. Verfahren gemäß Anspruch 6 und 8, aufweisend:
- Überführen von Teigwaren von einer parallelen Bahn (F, G, H) zu einer anderen (F, G, H), wenn die Durchschnittsanzahl an Teigwaren in einer Bahn der dritten Fördervorrichtung (3), welche von der ersten Fördervorrichtung (1) aufgenommen wird, größer als die der zweiten Fördervorrichtung (2) zuzuführende Anzahl von Teigwaren ist.

## Revendications

1. Système de tampon (10) pour des produits à base de pâte, comprenant :
- un premier convoyeur (1) pour distribuer des produits à base de pâte ;
- un deuxième convoyeur (2) pour enlever des produits à base de pâte ;
- un troisième convoyeur (3) pour recevoir les produits à base de pâte en provenance du premier convoyeur et pour distribuer les produits à base de pâte au deuxième convoyeur, le troisième convoyeur
∘ étant pourvu de déflecteurs ou de cames (4) pour supporter des produits individuels, et
∘ présentant un trajet ayant une longueur ajustable (B) entre le premier et le deuxième convoyeur ;
dans lequel :
∘ la longueur du trajet est ajustable en soulevant ou en abaissant au moins un emplacement (C) le long du trajet ;
**caractérisé en ce que**
le trajet du troisième convoyeur présente une forme de segment de cercle comportant deux branches droites (5, 6) ayant une longueur égale s'étendant depuis un point commun (E),
et une branche annulaire (7) orientée de façon distale depuis ledit point (E) et ayant un rayon correspondant à la longueur des branches droites (5, 6),
dans lequel la longueur des branches droites correspond à la distance la plus courte entre le premier (1) et le deuxième (2) convoyeur et dans lequel le point commun (E) des deux branches droites (5, 6) forme un axe de rotation pour le troisième convoyeur (3).

2. Système de tampon (10) selon la revendication 1, dans lequel le point commun (E) des deux branches droites (5, 6) est disposé adjacent au deuxième convoyeur (2) pour distribuer les produits à base de pâte audit deuxième convoyeur.

3. Système de tampon (10) selon l'une quelconque des revendications précédentes, dans lequel le troisième convoyeur (3) est divisé en multiples voies (F, G, H) s'étendant de manière parallèle depuis le premier (1) jusqu'au deuxième convoyeur (2) pour recevoir des produits à base de pâte distribués dans de multiples voies en provenance du premier convoyeur et pour distribuer des produits à base de pâte dans de multiples voies au deuxième convoyeur, chacune des voies du troisième convoyeur comportant un trajet ayant une longueur individuellement ajustable entre le premier et le deuxième convoyeur.

4. Système de tampon (10) selon la revendication 3, comprenant des moyens (8) pour transférer un produit à base de pâte d'une voie (F, G, H) à une autre voie (F, G, H) avant de le distribuer au deuxième convoyeur (2).

5. Système de tampon (10) selon la revendication 4, dans lequel les moyens pour transférer un produit à base de pâte d'une voie à une autre voie comprennent un dispositif de réception de produit à base de pâte intermédiaire (8), tel qu'une gouttière, conçu de sorte à être mobile dans une direction (J) perpendiculaire à la direction de transport (I) du deuxième convoyeur pour recevoir les produits à base de pâte en provenance du troisième convoyeur.

6. Procédé pour faire fonctionner un système de tampon (10) selon l'une quelconque des revendications précédentes, consistant :
- à recevoir des produits à base de pâte en provenance du premier convoyeur (1) et à distribuer les produits à base de pâte au deuxième convoyeur (2) avec le troisième convoyeur (3) ;
- à augmenter la longueur du trajet (B) entre le premier et le deuxième convoyeur lorsque la quantité de produits à base de pâte reçus du premier convoyeur est supérieure à la quantité de produits à base de pâte à distribuer au deuxième convoyeur ; et
- à réduire la longueur du trajet (B) entre le premier et le deuxième convoyeur lorsque la quantité de produits à base de pâte reçus du premier convoyeur est inférieure à la quantité de produits à base de pâte à distribuer au deuxième convoyeur.

7. Procédé selon la revendication 6, consistant à adapter la longueur du trajet (B) entre le premier (1) et le deuxième (2) convoyeur de telle sorte qu'un déflecteur ou une came (4) pour supporter un produit individuel soit désaligné, ou désalignée, par rapport à un produit transporté sur le premier convoyeur tout en mettant ou en gardant un déflecteur ou une came pour supporter un produit individuel en désalignement par rapport au deuxième convoyeur à une position prédéterminée.

8. Procédé selon la revendication 6 ou 7, consistant :
- à recevoir des produits à base de pâte en provenance du premier convoyeur (1) et à distribuer les produits à base de pâte au deuxième convoyeur (2) sur de multiples lignes parallèles (F, G, H).

9. Procédé selon les revendications 6 et 8, consistant :
- à transférer des produits à base de pâte d'une ligne parallèle (F, G, H) à une autre ligne (F, G, H) lorsque la quantité moyenne de produits à base de pâte dans une ligne du troisième convoyeur (3) reçus du premier convoyeur (1) est supérieure la quantité de produits à base de pâte à distribuer au deuxième convoyeur (2).
